# FASCICULE DE BREVET EUROPEEN

(11) **EP 3 016 518 B1**
(45) Date de publication et mention de la délivrance du brevet: **28.03.2018**
(21) Numéro de dépôt: 14745189.2
(22) Date de dépôt: 27.06.2014
(51) Int. Cl.: A21C 15/00

(54) **PROCÉDÉ DE GRAVURE LASER D'UN MOTIF SUR UN PAIN À HAMBURGER OU PAIN « BUNS »**
VERFAHREN ZUM LASERÄTZEN EINER STRUKTUR AUF EINEM SANDWICH ODER BRÖTCHEN
PROCESS FOR LASER ETCHING A PATTERN ON A SANDWICH ROLL OR BUN

(30) Priorité: 03.07.2013 FR 1356495
(43) Date de publication de la demande: 11.05.2016
(73) Titulaire: MS, 13111 Coudoux (FR)
(72) Inventeur: CUNY, Xavier, F-13880 Velaux (FR)
(74) Mandataire: Chevalier, Renaud Philippe
(86) Numéro de dépôt international: PCT/FR2014/051654
(87) Numéro de publication internationale: WO 2015/001235

(56) Documents cités:
- WO-A1-2013/014308
- DE-A1- 3 803 261
- DE-A1- 19 646 813
- NL-C2- 1 020 104

## Description

La présente invention se rapporte à un procédé de gravure d'un motif sur un pain à hamburger ou pain « buns ».

Elle se rapporte plus particulièrement à un procédé de gravure par application sur la surface du pain à hamburger d'un faisceau laser émis à partir d'une unité de gravure équipée d'une source laser.

Il est connu, notamment des documents US2011/012986 DE102006037922, EP1747838, DE19730887, FR2652541 et DE3803261, de procéder à une gravure laser d'un motif sur un article alimentaire du type poisson, viande, fruit, légume, produit de charcuterie, fromage, pain, pâtisserie ou gâteau.

Il est également connu du document NL 1 020 104 C2 un procédé de gravure d'un motif sur un pain, mettant en oeuvre une focalisation d'un faisceau laser avec une distance focale réglable, un réglage de la distance focale du faisceau laser et un passage du faisceau laser sur la surface à graver du pain pour réaliser des lignes de gravure du motif.

De tels procédés mettent généralement en oeuvre une source laser et un système de guidage et de focalisation du faisceau laser pour réaliser la gravure du motif souhaité sur la surface de l'article alimentaire.

Cependant, les procédés de gravure laser divulgués dans ces documents sont inefficaces pour graver de manière durable un motif sur un pain du type buns ou pain à hamburger produit industriellement et mis sous emballage.

En effet, avec un pain à hamburger (autrement appelé « buns » en anglais), on observe que le motif gravé tend à disparaître une fois le pain sous emballage étanche, sous l'effet de la levure qui, même après cuisson de la pâte, poursuit légèrement son processus de fermentation. Dans un emballage étanche, on observe que les conditions particulières d'humidité et de température à l'intérieur de l'emballage contribuent à ce que la levure continue d'interagir avec les composants organiques présents dans la pâte qui continue ainsi de lever, certes légèrement mais suffisamment pour dégrader voire faire disparaître le motif gravé sur la surface du pain.

Ainsi, lorsqu'on grave les pains à hamburger après cuisson selon les techniques classiques, puis qu'on emballe les pains à l'intérieur d'emballages étanches, l'atmosphère à l'intérieur des emballages s'avère suffisamment humide pour que la fermentation se poursuive légèrement et fasse disparaître au moins en partie le motif gravé. Il est d'ailleurs à noter que, dans le cas particulier des pains à hamburger mis sous emballage, cette poursuite de la fermentation contribue à un rééquilibrage des couleurs (autrement dit une uniformisation de la couleur) de la surface externe (ou croûte) du pain. De plus, pour les pains à hamburger fabriqués industriellement, il est primordial d'opérer un emballage rapide après cuisson pour éviter qu'ils ne sèchent et ainsi maintenir le moelleux des pains.

La présente invention a pour but de proposer un procédé de gravure qui permette de graver de manière pérenne un motif sur un pain à hamburger, après la cuisson du pain et avant sa mise sous emballage étanche, sans que le phénomène de fermentation qui se poursuit légèrement dans l'emballage ne fasse disparaître le motif gravé.

A cet effet, elle propose un procédé de gravure d'un motif sur une surface d'un pain à hamburger ou pain « buns », après cuisson du pain, par application sur la surface du pain d'un faisceau laser émis à partir d'une unité de gravure équipée d'une source laser, ledit procédé mettant en oeuvre les étapes suivantes :
- focalisation du faisceau laser en sortie de l'unité de gravure, avec une distance focale réglable entre la sortie de l'unité de gravure et un point de focalisation du faisceau laser ;
- réglage de la distance focale du faisceau laser pour que la surface à graver du pain ne coïncide pas avec le point de focalisation ;
- passage du faisceau laser sur la surface à graver du pain pour réaliser les lignes de gravure du motif, avec plusieurs passes du faisceau laser sur chaque ligne de gravure ;
- mise sous emballage étanche du pain après gravure.

Cette combinaison d'étapes contribue à l'obtention d'une gravure durable d'un motif sur la surface du pain à hamburger, qui forme une marque définitive ne disparaissant pas sous l'effet de la levure qui poursuit légèrement sa fermentation à l'intérieur de l'emballage étanche. En multipliant le nombre de passes du faisceau laser, on garantit une gravure (par brûlure de la croute du pain) suffisamment profonde et sombre pour obtenir un motif visible et qui dure. Etant donné que l'on multiplie le nombre de passes du faisceau laser, le faisceau laser n'est pas focalisé sur la surface à graver du pain (autrement dit la surface à graver se situe au-dessus ou en-dessous du point focal, dans une zone défocalisée du faisceau laser) afin d'éviter que le faisceau laser ne découpe le pain du fait des passages successifs.

Ainsi, grâce à l'invention, la mise sous emballage ne conduit pas à la disparition du motif gravé, quand bien même l'atmosphère dans l'emballage contribue à la poursuite du phénomène de fermentation, notamment avec le phénomène de rééquilibrage des couleurs de la croûte.

Dans une réalisation particulière, la gravure du motif est réalisée sur le pain avant la fin complète de la fermentation.

Conformément à d'autres caractéristiques avantageuses de l'invention :
- on sélectionne une puissance de la source laser entre 10 et 400 watts, de préférence entre 10 et 250 watts, et encore de préférence entre 30 et 150 watts ;
- on pilote la vitesse de déplacement du faisceau laser sur la surface du pain entre 10 et 40000 millimètres par seconde, de préférence entre 10 et 18000 millimètres par seconde, et encore de préférence entre 100 et 12000 millimètres par seconde ;
- la distance focale est réglée entre 50 et 1500 millimètres, de préférence entre 50 et 1200 millimètres, et encore de préférence entre 80 et 900 millimètres ;
- le nombre de passes du faisceau laser sur chaque ligne de gravure du motif est compris entre 10 et 300 passes, de préférence entre 10 et 60 passes ;
- on applique le faisceau laser sur la surface du pain pendant une durée comprise entre 0,2 et 20 secondes ;
- on règle la distance focale du faisceau laser pour que la surface à graver du pain soit située à une distance de l'unité de gravure comprise entre 0,8 et 1,2 fois la distance focale ;
- on règle la distance focale du faisceau laser pour que la surface à graver du pain soit située à une distance de l'unité de gravure non comprise entre 0,95 et 1,05 fois la distance focale.

D'autres caractéristiques et avantages de la présente invention apparaîtront à la lecture de la description détaillée ci-après, d'un exemple de mise en oeuvre non limitatif, faite en référence aux figures annexées suivantes :
- la figure 1 qui illustre schématiquement une installation de gravure pour la mise en oeuvre du procédé de gravure selon l'invention ; et
- la figure 2 qui correspond à un zoom sur la zone II de la figure 1.

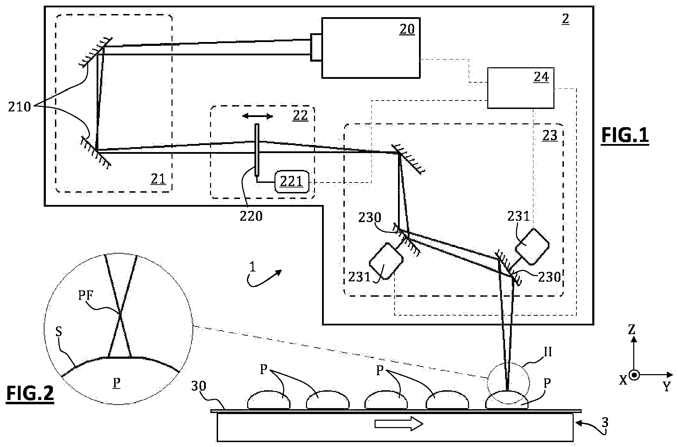

En référence à la figure 1, l'installation 1 de gravure comporte :
- une unité de gravure 2 par laser ;
- une unité de convoyage 3 de pains P à hamburger, présentant une surface S supérieure ou externe formant la croûte dorée du pain ; et
- une unité d'emballage (non illustrée) étanche des pains disposée après l'unité de gravure 2, les pains P étant convoyés de l'unité de gravure 2 vers l'unité d'emballage au moyen de l'unité de convoyage 3.

L'unité de gravure 2 est positionnée après le four de cuisson (non illustré) des pains P, voire même après une unité de refroidissement (non illustrée) des pains conçue pour refroidir les pains A en sortie du four, et notamment pour ramener la température des pains A à température ambiante.

L'unité de gravure 2 comporte successivement :
- une source laser 20 du type laser au dioxyde de carbone émettant un faisceau laser ;
- un système de renvoi 21 à 180° du faisceau laser, intégrant des miroirs et/ou des lentilles 210 qui retournent de 180° l'orientation du faisceau laser ;
- un système motorisé 22 de réglage de la distance focale du faisceau laser en sortie de l'unité de gravure 2, ce système motorisé 22 comprenant une lentille 220 piloté en translation par un moteur 221 ;
- une tête galvanométrique 23 comprenant deux miroirs 230 redirigeant le faisceau laser selon deux axes X, Y, ces deux miroirs 230 étant pilotés en position par des moteurs 231 respectifs ;
- une unité de contrôle 24 contrôlant à la fois la source laser 20, le moteur 221 du système motorisé 22 et les moteurs 231 de la tête galvanométrique 23.

L'unité de convoyage 3 comporte un tapis s'étendant selon un plan horizontal parallèle aux axes X, Y, sur lequel les pains P sont transportés linéairement.

En sortie de l'unité de gravure 2, autrement dit en sortie de la tête galvanométrique 23, le faisceau laser s'étend selon un axe vertical Z, perpendiculaire au tapis de transport 30.

La mise en oeuvre du procédé de gravure d'un motif (texte et/ou dessin) est réalisée avec les six contraintes ou conditions suivantes.

La première contrainte concerne la puissance de la source laser 20 qui est comprise entre 10 et 400 watts, et notamment entre 30 et 150 watts comme par exemple de l'ordre de 100 watts.

La puissance de la source laser 20 est ainsi au minimum de 10 watts si l'unité de gravure 2 est très proche du pain P en travaillant avec une distance focale courte, mais peut aller jusqu'à 400 watts. Lors de la gravure du motif, l'unité de contrôle 24 peut piloter la source laser 20 pour faire varier la puissance en fonction de la ligne de gravure du motif (le motif gravé étant constituer d'une pluralité de lignes de gravure, rectilignes ou courbes), car les traits ou lignes du motif peuvent nécessiter des puissances différentes car telle ou telle ligne doit être plus ou moins prononcée dans le motif.

La deuxième contrainte concerne la vitesse de déplacement du faisceau laser sur la surface du pain P qui est comprise entre 10 et 40000 millimètres par seconde. Cette vitesse de déplacement, ou vitesse de gravure, est directement donnée par la fréquence de la source laser 20 et la vitesse de déplacement des miroirs 230 pilotés par les moteurs 231 de la tête galvanométrique 23. La fréquence de la source laser 20 est un paramètre intrinsèque à la source et cette fréquence est avantageusement fixée entre 1 et 20 kHz pour obtenir une gravure satisfaisante et durable. En outre, l'unité de contrôle 24 peut piloter les moteurs 231, et donc contrôler les vitesses des miroirs 230 et ainsi la vitesse de déplacement du faisceau laser dans le plan X, Y pour faire varier cette vitesse en fonction de la forme et des dimensions du motif à graver. A titre d'exemple, la vitesse de déplacement peut diminuer avec le diamètre d'un cercle à graver. Pour un pain à mie aéré, tel qu'un pain du type buns ou pain à hamburger, la vitesse de déplacement est avantageusement comprise entre 10 et 18000 millimètres par seconde, de préférence entre 100 et 12000 millimètres par seconde comme par exemple de l'ordre de 10000 millimètres par seconde.

La troisième contrainte concerne la distance focale du faisceau laser en sortie de l'unité de gravure 2 (selon l'axe vertical Z) qui est comprise entre 50 et 1500 millimètres ; cette distance focale étant réglée par le système motorisé 22. La distance focale correspond à la distance entre la sortie de la tête galvanométrique 23 et le point focal PF du faisceau laser (point virtuel de convergence sur lequel le faisceau est le plus concentré, et qui correspond en réalité à une zone non ponctuelle de convergence). Il est à noter que la distance focale est liée à la puissance de laser, se traduisant par une relation entre la distance focale et la puissance qui permet d'optimiser la puissance et l'effet thermique sur le pain P et ainsi optimiser la durée de gravure. Cette distance focale est avantageusement comprise entre 50 et 1200 millimètres, de préférence entre 80 et 900 millimètres comme par exemple de l'ordre de 800 millimètres.

La quatrième contrainte concerne le réglage de la distance focale du faisceau laser en sortie de l'unité de gravure 2 pour que la surface S du pain P soit positionnée à une distance de l'unité de gravure 2 (ou distance par rapport à la sortie de la tête galvanométrique 23) comprise entre 0,8 et 1,2 fois la distance focale, tout en s'assurant que la surface S à graver du pain P ne coïncide pas avec le point de focalisation PF, ainsi qu'illustré sur la figure 2 ; ce réglage dépendant bien entendu de la distance entre la surface S des les pains P et la sortie de l'unité de gravure 2. Autrement dit, comme visible sur la figure 2, la surface S à graver du pain P n'est pas positionnée exactement sur le point focal PF du faisceau laser, pour éviter une découpe laser au lieu d'une gravure, mais dans une zone autour de ce point focal, dans une fourchette de plus ou moins 20% de la distance focale autour du point focal PF. On parle alors d'une défocalisation qui permet d'utiliser l'effet thermique du faisceau laser, sans découper le pain P. On choisira avantageusement de régler la distance focale pour que la surface S à graver du pain P ne soit pas située à une distance de l'unité de gravure 2 comprise entre 0,95 et 1,05 fois la distance focale. Au bilan, la surface S du pain P est située à une distance de l'unité de gravure 2 comprise entre 0,8 et 0,95 fois la distance focale ou bien à une distance comprise entre 1,05 et 1,2 fois la distance focale. Cette distance aura bien entendu une influence sur l'épaisseur du trait, car plus on est proche du point focal et plus le trait est fin, et plus on est loin du point focal et plus le trait est épais. A titre d'exemple, pour une distance focale de 800 millimètres, la surface à graver du pain P est située à une distance de la sortie de la tête galvanométrique 23 comprise entre 640 et 760 millimètres ou entre 840 et 960 millimètres.

La cinquième contrainte concerne la durée de gravure qui est comprise entre 0,2 et 20 secondes ; cette durée de gravure étant directement liée aux dimensions du motif et aux longueurs de ses lignes. L'unité de contrôle 24 contrôle la source laser 20 pour régler cette durée de gravure.

La sixième contrainte concerne le nombre de passes du faisceau laser sur chacune des lignes du motif à graver sur la surface du pain P qui est compris entre 10 et 300 passes. Pour créer un effet thermique optimal de la gravure laser, une même ligne ou contour du motif fait l'objet de plusieurs passages du faisceau laser, ce nombre de passes étant optimisé pour marquer durablement la surface avec un marquage fin et précis, sans creuser ou abîmer le pain P. L'unité de contrôle 24 contrôle la source laser 20 pour régler ce nombre de passes.

## Revendications

1. Procédé de gravure d'un motif sur une surface (S) d'un pain (P) à hamburger ou pain « buns », après cuisson du pain (P), par application sur la surface du pain (P) d'un faisceau laser émis à partir d'une unité de gravure (2) équipée d'une source laser (20), ledit procédé mettant en oeuvre les étapes suivantes :
- focalisation du faisceau laser en sortie de l'unité de gravure (2), avec une distance focale réglable entre la sortie de l'unité de gravure (2) et un point de focalisation (PF) du faisceau laser ;
- réglage de la distance focale du faisceau laser pour que la surface (S) à graver du pain (P) ne coïncide pas avec le point de focalisation (PF) ;
- passage du faisceau laser sur la surface (S) à graver du pain (P) pour réaliser les lignes de gravure du motif, avec plusieurs passes du faisceau laser sur chaque ligne de gravure ;
- mise sous emballage étanche du pain (P) après gravure.

2. Procédé de gravure selon la revendication 1, dans lequel la gravure du motif est réalisée sur le pain (P) avant la fin complète de la fermentation de la levure du pain (P).

3. Procédé de gravure selon les revendications 1 ou 2, dans lequel on sélectionne une puissance de la source laser (20) entre 10 et 400 watts, de préférence entre 10 et 250 watts, et encore de préférence entre 30 et 150 watts.

4. Procédé de gravure selon l'une quelconque des revendications précédentes, dans lequel on pilote la vitesse de déplacement du faisceau laser sur la surface (S) du pain (P) entre 10 et 40000 millimètres par seconde, de préférence entre 10 et 18000 millimètres par seconde, et encore de préférence entre 100 et 12000 millimètres par seconde.

5. Procédé de gravure selon l'une quelconque des revendications précédentes, dans lequel la distance focale est réglée entre 50 et 1500 millimètres, de préférence entre 50 et 1200 millimètres, et encore de préférence entre 80 et 900 millimètres.

6. Procédé de gravure selon l'une quelconque des revendications précédentes, dans lequel le nombre de passes du faisceau laser sur chaque ligne de gravure du motif est compris entre 10 et 300 passes, de préférence entre 10 et 60 passes.

7. Procédé de gravure selon l'une quelconque des revendications précédentes, dans lequel on applique le faisceau laser sur la surface (S) du pain (P) pendant une durée comprise entre 0,2 et 20 secondes.

8. Procédé de gravure selon l'une quelconque des revendications précédentes, dans lequel on règle la distance focale du faisceau laser pour que la surface (S) à graver du pain (P) soit située à une distance de l'unité de gravure (2) comprise entre 0,8 et 1,2 fois la distance focale.

9. Procédé de gravure selon l'une quelconque des revendications précédentes, dans lequel on règle la distance focale du faisceau laser pour que la surface (S) à graver du pain (P) soit située à une distance de l'unité de gravure (2) non comprise entre 0,95 et 1,05 fois la distance focale.

## Patentansprüche

1. Verfahren zum Gravieren eines Motivs auf eine Oberfläche (S) eines Hamburgerbrötchens (P) oder "Bun"-Brötchens nach Backen des Brötchens (P), durch Anwenden eines Laserstrahls, der aus einer mit einer Laserquelle (20) ausgestatteten Graviereinheit (2) emittiert wird, auf der Oberfläche des Brötchens (P), wobei das Verfahren die folgenden Schritte umsetzt:
- Fokussieren des Laserstrahls am Ausgang der Graviereinheit (2) mit einer einstellbaren Brennweite zwischen dem Ausgang der Graviereinheit (2) und einem Fokussierungspunkt (PF) des Laserstrahls;
- Einstellen der Brennweite des Laserstrahls so, dass die zu gravierende Oberfläche (S) des Brötchens (P) nicht mit dem Fokussierpunkt (PF) zusammenfällt;
- Lenken des Laserstrahls über die zu gravierende Oberfläche (S) des Brötchens (P), um die Gravurlinien des Motivs auszuführen, mit mehreren Durchläufen des Laserstrahls über jede Gravurlinie;
- dichtes Verpacken des Brötchens (P) nach Gravur.

2. Gravurverfahren nach Anspruch 1, wobei das Gravieren des Motivs auf dem Brötchen (P) vor dem vollständigen Ende des Gärens der Hefe des Brötchens (P) ausgeführt wird.

3. Gravurverfahren nach den Ansprüchen 1 oder 2, wobei eine Leistung der Laserquelle (20) zwischen 10 und 400 Watt, bevorzugt zwischen 10 und 250 Watt, und noch bevorzugter zwischen 30 und 150 Watt ausgewählt wird.

4. Gravurverfahren nach einem der vorstehenden Ansprüche, wobei die Bewegungsgeschwindigkeit des Laserstrahls auf der Oberfläche (S) des Brötchens (P) zwischen 10 und 40000 Millimetern pro Sekunde, bevorzugt zwischen 10 und 18000 Millimetern pro Sekunde, und noch bevorzugter zwischen 100 und 12000 Millimetern pro Sekunde gesteuert wird.

5. Gravurverfahren nach einem der vorstehenden Ansprüche, wobei die Brennweite zwischen 50 und 1500 Millimeter, bevorzugt zwischen 50 und 1200 Millimeter, und noch bevorzugter zwischen 80 und 900 Millimeter eingestellt wird.

6. Gravurverfahren nach einem der vorstehenden Ansprüche, wobei die Anzahl der Durchläufe des Laserstrahls über jede Gravurlinie des Motivs im Bereich zwischen 10 und 300 Durchläufen, bevorzugt zwischen 10 und 60 Durchläufen liegt.

7. Gravurverfahren nach einem der vorstehenden Ansprüche, wobei der Laserstrahl während einer Dauer im Bereich zwischen 0,2 und 20 Sekunden auf der Oberfläche (S) des Brötchens (P) angewendet wird.

8. Gravurverfahren nach einem der vorstehenden Ansprüche, wobei die Brennweite des Laserstrahls so eingestellt wird, dass die zu gravierende Oberfläche (S) des Brötchens (P) in einer Entfernung von der Graviereinheit (2) liegt, die im Bereich zwischen dem 0,8- und 1,2-fachen der Brennweite liegt.

9. Gravurverfahren nach einem der vorstehenden Ansprüche, wobei die Brennweite des Laserstrahls so eingestellt wird, dass die zu gravierende Oberfläche (S) des Brötchens (P) in einer Entfernung von der Graviereinheit (2) liegt, die nicht im Bereich zwischen dem 0,95- und 1,05-fachen der Brennweite liegt.

## Claims

1. A method for engraving a pattern on a surface (S) of a hamburger bread (P) or «buns» bread, after baking the bread (P), by applying on the surface of the bread (P) a laser beam emitted from an engraving unit (2) equipped with a laser source (20), said method implementing the following steps:
- focusing the laser beam at the outlet of the engraving unit (2), with an adjustable focal distance between the outlet of the engraving unit (2) and a focal point (PF) of the laser beam;
- adjusting the focal distance of the laser beam so that the surface (S) of the bread (P) to be engraved does not match with the focal point (PF);
- passing the laser beam on the surface (S) of the bread (P) to be engraved to carry out the engraving lines of the pattern, with several passes of the laser beam on each engraving line;
- packaging in a sealed manner the bread (P) after engraving.

2. The engraving method according to claim 1, wherein the engraving of the pattern is carried out on the bread (P) before the fermentation of the bread (P) yeast is completely finished.

3. The engraving method according to claim 1 or 2, wherein a power of the laser source (20) is selected between 10 and 400 watts, preferably between 10 and 250 watts, and more preferably between 30 and 150 watts.

4. The engraving method according to any one of the preceding claims, wherein the displacement speed of the laser beam on the surface (S) of the bread (P) is driven between 10 and 40,000 millimeters per second, preferably between 10 and 18,000 millimeters per second, and more preferably between 100 and 12,000 millimeters per second.

5. The engraving method according to any one of the preceding claims, wherein the focal distance is adjusted between 50 and 1500 millimeters, preferably between 50 and 1200 millimeters, and more preferably between 80 and 900 millimeters.

6. The engraving method according to any one of the preceding claims, wherein the number of passes of the laser beam on each engraving line of the pattern is comprised between 10 and 300 passes, preferably between 10 and 60 passes.

7. The engraving method according to any one of the preceding claims, wherein the laser beam is applied on the surface (S) of the bread (P) during a period comprised between 0.2 and 20 seconds.

8. The engraving method according to any one of the preceding claims, wherein the focal distance of the laser beam is adjusted so that the surface (S) of the bread (P) to be engraved is located at a distance from the engraving unit (2) comprised between 0.8 and 1.2 times the focal distance.

9. The engraving method according to any one of the preceding claims, wherein the focal distance of the laser beam is adjusted so that the surface (S) of the bread (P) to be engraved is located at a distance from the engraving unit (2) not comprised between 0.95 and 1.05 times the focal distance.
